# EUROPEAN PATENT APPLICATION

(11) **EP 4 439 813 A1**
(43) Date of publication of application: **02.10.2024**
(21) Application number: 23305465.9
(22) Date of filing: 31.03.2023
(51) Int. Cl.: H01M 50/147, H01M 50/186, H01M 50/193, H01M 50/198, H01M 50/358, H01M 50/30, H01M 50/188, H01M 50/552, H01M 50/184

(54) **ELECTROCHEMICAL CELL COMPRISING A SEALING SYSTEM FORMING A ONE-WAY VALVE**

(71) Applicant: Automotive Cells Company SE, 33520 Bruges (FR)
(72) Inventor: ORIGUCHI, Masato, 78120 RAMBOUILLET (FR); CHOI, Hangjune, 33200 BORDEAUX (FR)
(74) Representative: Lavoix

(57) **Abstract**

An electrochemical cell comprising:
- a can (14) defining an interior volume (16), an exterior volume (18), and a orifice (20),
- a terminal (22) comprising an external contact (24), a foot (26, and a post (28),
- a sealing system (30) for preventing moisture from entering the interior volume, comprising an elastomeric material and having a peripheral part (38) and a central part (40) delimiting an intermediate chamber (42), the peripheral part being compressed between the can and the foot.

The sealing system includes a permeation portion (46) comprising a polymer material, and extending through the peripheral part and the central part to allow gas molecules from the interior volume into the intermediate chamber, the central part comprising a tight lip (48) around the post for forming a one-way valve (50) between the intermediate chamber and the exterior volume.

## Description

The present invention deals with an electrochemical cell, in particular a lithium-ion one.

The invention also deals with a battery comprising one or several such cells.

The term "battery" usually means a plurality of electrochemical cells electrically connected to each other. According to a particular example of battery, the plurality of electrochemical cells is arranged in the form of one or more module(s), each module comprising several electrochemical cells electrically connected to each other and mechanically assembled to each other by a system of assembly, such as assembly plates.

An electrochemical cell usually comprises, in particular, a plurality of positive electrodes intertwined with negative electrodes and separators, known as a "stack" when they are cut in pieces, or as a "jelly roll" when they are continuously wound together. The positive electrodes are connected to each other and to a positive terminal of the cell, and the negative electrodes are connected to each other and to a negative terminal of the cell.

These elements are protected by a mechanically resistant envelope, such as a hard case, also known as a "can", or a soft pouch. A hard case is usually prismatic or cylindrical.

Batteries, in particular lithium-ion ones, are not compatible with water, therefore the can is completely sealed in order to prevent any moisture from entering the electrochemical cell. The can is hermetic and air tight.

However, organic electrolytes used in Li-ion batteries, such as the EC, DMC, EMC solvents or others, and the LiPF₆ salt or others, are known for reacting with cathode material, as well as anode material. This contributes to the degradation of the cell performances, even if some of these reactions may also be beneficial in order to form passivation layers on the cathode active material (called CEI, cathode electrolyte interphase) and on the anode material, typically graphite (called SEI, solid electrolyte interphase).

Such reactions are decomposition reactions, and can generate gas inside the electrochemical cell, which may increase the internal pressure. If gas generation continues, the can may be deformed or open due to high pressure. The electrochemical cell no longer functions.

In order to secure a battery life of 15 to 20 years, it is known to reduce gas generation by selecting specific electrolyte solvents and salt compositions, and/or to mix them with specific additives.

However, high energy cathode materials, such as NMC with a high nickel content, happen to be very reactive with the electrolyte solvents and also high energy anode materials, such as SiOx, is known to re-create the solid electrolyte interphase (SEI) continuously along to the charge and discharge cycles due to its high volume change. Such gas generation may limit the use of such high energy materials.

US 2012/028089 describes using a gas permeable membrane which does not let any liquid pass, and a mechanical vent in order to prevent water from going into the electrochemical cell. However, this solution requires a complex venting device which is thus costly. Moreover, it requires additional space in order to be attached to the can, which lowers the energy density of the electrochemical cell.

An aim of the invention is to solve or improve the above issues, in particular to avoid excessive pressure within the electrochemical cell, without increasing its cost or reducing its energy density.

To this end, the invention proposes an electrochemical cell comprising:
- a can defining an interior volume of the cell, an exterior volume, and at least one orifice,
- a terminal comprising an external contact, a foot located in the interior volume, and a post extending along an axis and connecting the external contact with the foot mechanically and electrically via the orifice, and
- a sealing system adapted for preventing moisture from entering the interior volume via the orifice, the sealing system comprising an elastomeric material and having a peripheral part and a central part both surrounding the post around the axis, the peripheral part being axially compressed between the can and the foot,
   the central part and the post delimiting an intermediate chamber comprising gas, and
   the sealing system including a permeation portion comprising a polymer material, the permeation portion being permeable to a set of molecules including CO₂, CO, H₂ and CH₄, the permeation portion extending through the peripheral part and the central part in order to allow the molecules from said set to permeate from the interior volume into the intermediate chamber when a first pressure difference between the interior volume and the intermediate chamber is positive, the central part comprising a tight lip around the post, the lip and the post forming a one-way valve configured for letting at least some of the gas exit the intermediate chamber along the post axially toward the exterior volume when a second pressure difference between the intermediate chamber and the exterior volume is greater than a threshold.

In other embodiments, the cell comprises one or several of the following features, taken in isolation or any technically feasible combination:
- the cell is a lithium-ion cell;
- the elastomeric material is fluorocarbon elastomer, perfluoroalkoxy alkane, polypropylene, polyethylene, ethylene propylene diene monomer rubber, polyphenylene, silicon, polyurethane or polyacrylic rubber;
- the elastomeric material is fluorocarbon elastomer, perfluoroalkoxy alkane, polypropylene, polyethylene, ethylene propylene diene monomer rubber, polyphenylene, silicon, polyurethane or polyacrylic rubber;
- the polymer material of the permeation portion comprises an expanded polymer a with porous structure, or comprises polymer fibers forming a non-woven fabric;
- the intermediate chamber is also delimited by the foot;
- the intermediate chamber has a shape of revolution around the axis;
- said permeation portion is a washer surrounding the axis or has the shape of a washer surrounding the axis;
- said permeation portion extends against the foot;
- said permeation portion extends in an intermediate layer of the sealing system perpendicular to the axis and axially separated from the foot at least by a layer of elastomeric material, and axially separated from the can at least by another layer of elastomeric material;
- the central part comprises a frustoconical portion around the axis, the frustoconical portion axially flaring toward the foot and having a distal extremity axially with respect to the foot, the distal extremity forming the lip;
- the peripheral part has a disc shape;
- a first electrical insulator axially extending between the external contact and the can, and a second electrical insulator axially extending between the foot and the can; and
- the one-way valve is configured so that the threshold is comprised between 0.05 and 0.30 MPa.

The invention also proposes a battery, in particular for a vehicle, comprising at least one cell as described above.

The invention and its advantages will be better understood upon reading the following description, given solely by way of example and with reference to the appended drawings, in which:
- Figure 1 is a schematic view of a battery according to the invention,
- Figure 2 is a perspective, partial view of an electrochemical cell of the battery shown in Figure 1, the internal elements of the cell being not shown, the terminals and sealing systems being exploded along an axis,
- Figure 3 is a schematic cross-sectional view of one of the sealing systems of the cell shown in Figures 1 and 2, and
- Figure 4 is a schematic cross-sectional view of a sealing system according to a variant of the one shown in Figures 2 and 3.

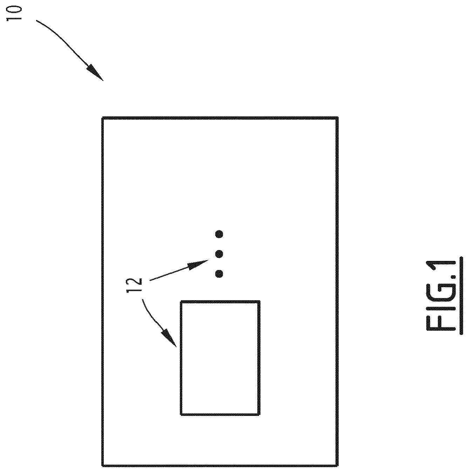

With reference to Figure 1, a battery 10 according to the invention will be described.

The battery 10 is for example adapted for being mounted in an electric or hybrid vehicle (not shown) in order to provide power to an engine (not shown) and/or pieces of equipment (not shown) of the vehicle.

In the example, the battery 10 comprises a plurality of electrochemical cells 12, of which only one is shown.

As a variant (not shown), in particular if it is not intended for a vehicle, the battery 10 may comprises only one cell.

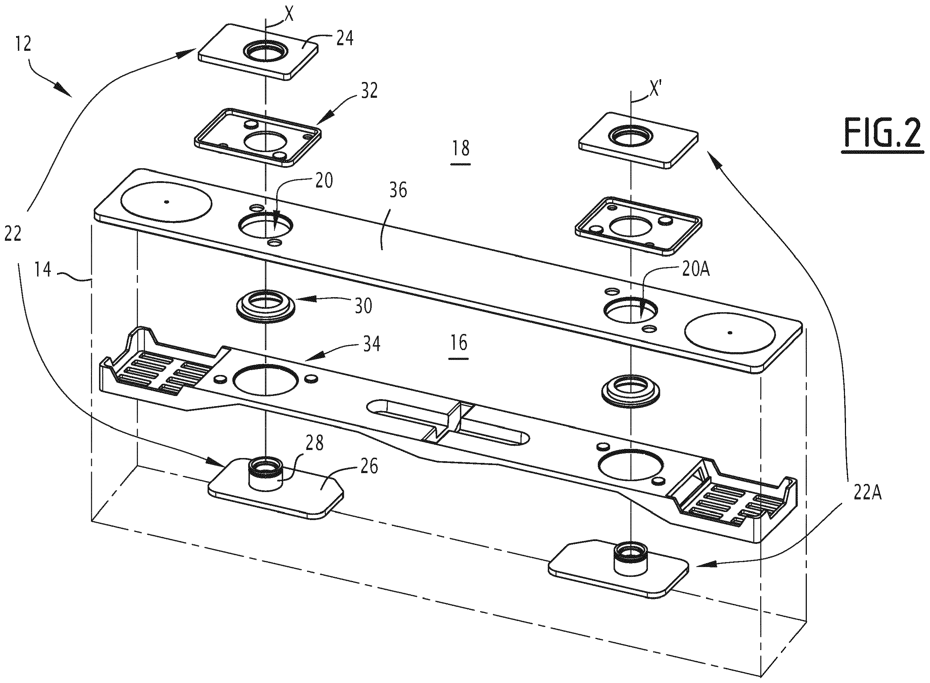

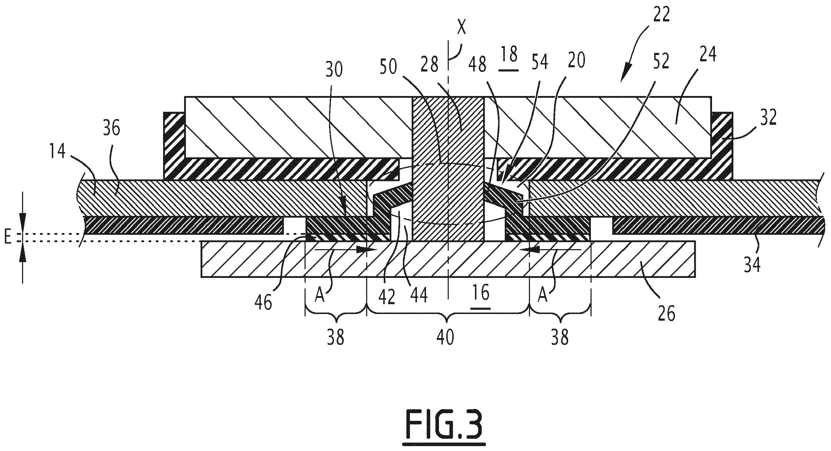

The cells 12 are advantageously analogous to each other and only one of them will be described hereafter with reference to Figures 2 and 3.

The cell 12 comprises a can 14 defining an interior volume 16, an exterior volume 18 (or surrounding atmosphere), and at least one orifice 20 for a terminal 22 comprising an external contact 24 located in the exterior volume 18, a foot 26 located in the interior volume, and a post 28 extending along an axis X and connecting the external contact with the foot mechanically and electrically via the orifice.

In the example, the cell 12 actually defines two orifices 20, 20A for two terminals 22, 22A.

The terminal 22A is for example analogous to the terminal 22 (except for polarity) and will not be described in detail.

The cell 12 also comprises a sealing system 30 adapted for preventing moisture from entering the interior volume 16 via the orifice 18.

Still in the example, the cell 12 advantageously comprises a first electrical insulator 32 axially extending between the external contact 24 and the can 14, and a second electrical insulator 34 axially extending between the foot 26 and the can 14.

In this document, a material is considered electrically insulating if its electrical conductivity is, for example, less than 1.0.10⁻⁶ S·m⁻¹ at 25°C. A material is considered electrically conductive if its electrical conductivity is for example greater than 1.0.10⁶ S·m⁻¹ at 25°C.

Naturally, the cell 12 comprises electrochemical elements that are known in themselves and will not be described. These elements for example form an anode and a cathode respectively connected to the foot 26 of the terminals 22, 22A. The anode and cathode may be in the form of tabs (not shown) respectively fixed to the foot 26 of the terminals 22, 22A, for example by laser welding.

For example, the cell 12 is a lithium-ion electrochemical cell. For example, the cell 12 contains one or several electrolyte solvents, such as EC (ethylene carbonate), DMC (dimethyl carbonate), EMC (ethyl methyl carbonate), DEC (diethyl carbonate)... etc, and lithium salts, such as LiPF₆. The cell 12 may contain cathode materials, such as NMC (lithium nickel manganese cobalt oxide), as well as anode materials, such as graphite and SiOₓ.

The can 14 advantageously has a parallelepiped shape, the orifice 18 being for example located in a cover 36 of the can.

In other embodiments (not shown), the can 14 may have other shapes and/or the orifice 18 may be located in another part of the can than the cover 36.

The second electrical insulator 34 for example form a spacer between the cover 36 and internal elements (not shown) of the cell 12.

The external contact 24 and the foot 26 for example have a rectangular or square shape in view along the axis X.

The foot 26 is for example made of copper if it belongs to a negative terminal, or of aluminum if it belongs to a positive terminal.

The post 28 advantageously has a cylindrical shape.

The post 28 and the foot 26 are fixed to each other for example by friction stir welding.

The sealing system 30 comprises an elastomeric material, for example fluorocarbon elastomer (FKM), perfluoroalkoxy alkane (PFA), polypropylene (PP), polyethylene (PE), ethylene propylene diene monomer rubber (EPDM), polyphenylene sulfide (PPS), silicone rubber (VMQ), polyurethane (PU) or polyacrylic rubber (ACM).

As best seen in Figure 3, the sealing system 30 has a peripheral part 38 and a central part 40 both surrounding the post 28 around the axis X, the peripheral part being axially compressed between the can 14 and the foot 26, and the central part 40 and the post 28 delimiting an intermediate chamber 42 comprising gas 44.

The sealing system 30 includes a permeation portion 46 comprising a polymer material, the permeation portion being permeable to a set of molecules including CO₂, CO, H₂ and CH₄, the permeation portion extending through the peripheral part 38 and the central part 40 in order to allow molecules from said set to permeate from the interior volume 16 into the intermediate chamber 42 when a first pressure difference between the interior volume 16 and the intermediate chamber 42 is positive.

Preferably, apart from the permeation portion 46, the rest of the sealing system 30 is made of the elastomeric material and is non-porous.

The peripheral part 38 for example has a disc shape. Compression of the peripheral part 38 is advantageously obtained by assembling the terminal 22, the external contact 24 and the foot 26 being on either sides of the can 14 along the axis X and linked by the post 28.

For example, the central part 40 axially extended between the post 26 and the external contact 24, and radially with respect to the axis X within the orifice 20.

The central part 40 comprises a tight lip 48 around the post 28, the lip and the post forming a one-way valve 50 configured for letting at least some of the gas 44 exit the intermediate chamber 42 along the post 28 axially toward the exterior volume 18 when a second pressure difference between the intermediate chamber 42 and the exterior volume 18 is greater than a threshold.

The central part 40 advantageously comprises a frustoconical portion 52 around the axis X, the frustoconical portion axially flaring toward the foot 26 and having a distal extremity 54 axially with respect to the foot, the distal extremity forming the lip 48.

The one-way valve 50 is advantageously configured so that the threshold is comprised between 0.05 and 0.30 MPa, for example by adjusting the shape and tightness of the lip 48.

In the example, the intermediate chamber 42 is also delimited by the foot 26. For example, the intermediate chamber 42 has a shape of revolution around the axis X.

For example, the polymer material of the permeation portion 46 is fluorocarbon elastomer (FKM), perfluoroalkoxy alkane (PFA), polypropylene (PP), polyethylene (PE), ethylene propylene diene monomer rubber (EPDM), polyphenylene sulfide (PPS), silicone rubber (VMQ), polyurethane (PU) or polyacrylic rubber (ACM).

The polymer material of the permeation portion 46 advantageously comprises an expanded polymer with a porous structure, or comprises polymer fibers forming a non-woven fabric.

The permeation portion 46 advantageously defines a radial path (arrows A) for the molecules of said set from the interior volume 16 into the intermediate chamber 42. The permeation portion 46 is adapted for preventing liquids from passing from the interior volume 16 into the intermediate chamber 42.

The molecules of said set are gaseous at 25°C under the normal atmospheric pressure (101325 Pa).

The permeation portion 46 is for example a washer surrounding the axis X, or has the shape of a washer surrounding the axis X, and is advantageously entirely made of said polymer. Advantageously, the rest of the sealing system 30 (apart from the permeation portion 46) is made of the elastomeric material.

The permeation portion 46 is preferably fixed to the rest of the sealing system 30, or, as a variant, maintained by the compression applied on the peripheral portion 38 by the can 14 and the foot 26.

In the example, the permeation portion 46 extends against the foot 26.

The permeation portion 46 is advantageously configured, for example by selecting an adequate thickness E along the axis, so as to allow one to three liters of gas (considered at 25°C and atmospheric pressure) to permeate over 10 years.

This can be realized for example with a material that has a gas permeability coefficient between 5000 and 500000 ml/(m².24hr.atm), and a 1mm thickness.

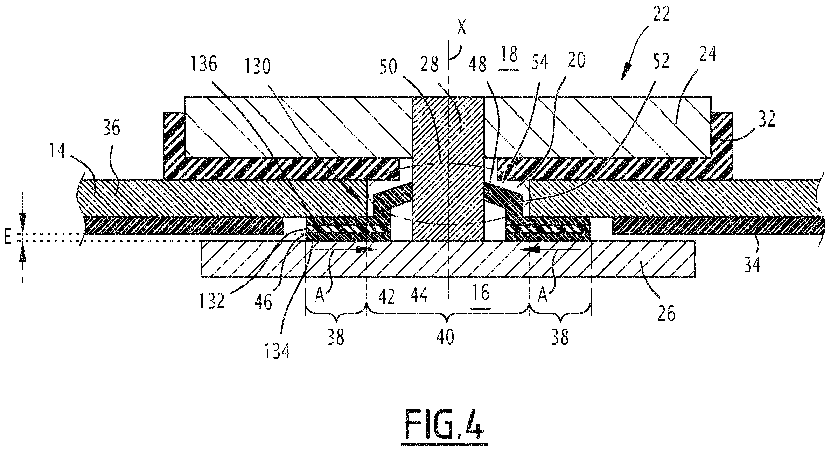

A sealing system 130 according to a variant of the invention will now be described with reference to Figure 4. The sealing system 130 is analogous to the sealing system 30 shown in Figures 2 and 3. Similar elements bear the same numeral references and will not be described again. Only the differences will be described hereafter.

The permeation portion 46 extends in an intermediate layer 132 of the sealing system 130 perpendicular to the axis X and axially separated from the foot 26 at least by a layer 134 of elastomeric material, and axially separated from the can 14 at least by another layer 136 of elastomeric material.

In other words, the permeation portion 46 does not extend against the foot 26. This is interesting when welding the anode or cathode elements to the foot 26. The foot temperature is then rather high and having the polymer of the permeation portion 46 away from the foot 26 reduces the risk of damaging the polymer. The layer 134 of elastomeric material acts as a protective layer.

The operation of the sealing systems 30 and 130 stems from their structure and will now be briefly described.

The sealing systems 30, 130 prevent moisture from entering the interior volume 16, the peripheral part 38 being compressed between the can 14 and the foot 26 around the orifice 20, and the first pressure difference (between the interior volume 16 and the intermediate chamber 42) being normally positive.

Liquids present in the interior volume 16 cannot go through the peripheral part 38, whether through the elastomeric material or the permeation portion 46.

When or if the first pressure difference is positive, said molecules of gas generated within the interior volume 16 permeate via the permeation portion 46 and arrive in the intermediate chamber 42. This decreases the pressure in the interior volume 16.

Then the pressure in the intermediate chamber 42 gradually increases. When the second pressure difference (between the intermediate chamber 42 and the exterior volume 18) exceeds the threshold, at least some of the gas 44 of the intermediate chamber 42 exits through the one-way valve 50 into the exterior volume 18.

If steady-state is reached, the pressure in the intermediate chamber 42 is the atmospheric pressure (about 0.1 MPa) plus the threshold.So, in the example, the pressure of the intermediate chamber 42 is limited to an absolute pressure approximately comprised between 0.15 and 0.40 MPa.

As a result, the pressure in the interior volume 16 cannot increase too much.

Thanks to the above described features, excessive pressure is avoided within the electrochemical cell 12, without increasing its cost or reducing its energy density, as the sealing systems 30, 130 do not request much space and are easy to produce.

## Claims

1. An electrochemical cell (12) comprising:
- a can (14) defining an interior volume (16) of the cell (12), an exterior volume (18), and at least one orifice (20),
- a terminal (22) comprising an external contact (24), a foot (26) located in the interior volume (16), and a post (28) extending along an axis (X) and connecting the external contact (24) with the foot (26) mechanically and electrically via the orifice (20), and
- a sealing system (30; 130) adapted for preventing moisture from entering the interior volume (16) via the orifice (20), the sealing system (30; 130) comprising an elastomeric material and having a peripheral part (38) and a central part (40) both surrounding the post (28) around the axis (X), the peripheral part (38) being axially compressed between the can (14) and the foot (26),
the central part (40) and the post (28) delimiting an intermediate chamber (42) comprising gas (44), and
the sealing system (30; 130) including a permeation portion (46) comprising a polymer material, the permeation portion (46) being permeable to a set of molecules including CO₂, CO, H₂ and CH₄, the permeation portion (46) extending through the peripheral part (38) and the central part (40) in order to allow the molecules from said set to permeate from the interior volume (16) into the intermediate chamber (42) when a first pressure difference between the interior volume (16) and the intermediate chamber (42) is positive, the central part (40) comprising a tight lip (48) around the post (28), the lip and the post (28) forming a one-way valve (50) configured for letting at least some of the gas (44) exit the intermediate chamber (42) along the post (28) axially toward the exterior volume (18) when a second pressure difference between the intermediate chamber (42) and the exterior volume (18) is greater than a threshold.

2. The cell (12) according to claim 1, wherein the cell (12) is a lithium-ion cell (12).

3. The cell (12) according to claim 1 or 2, wherein the elastomeric material is fluorocarbon elastomer (FKM), perfluoroalkoxy alkane (PFA), polypropylene (PP), polyethylene (PE), ethylene propylene diene monomer rubber (EPDM), polyphenylene (PPS), silicon (VMQ), polyurethane (PU) or polyacrylic rubber (ACM).

4. The cell (12) according to any one of claims 1 to 3, wherein the elastomeric material is fluorocarbon elastomer (FKM), perfluoroalkoxy alkane (PFA), polypropylene (PP), polyethylene (PE), ethylene propylene diene monomer rubber (EPDM), polyphenylene (PPS), silicon (VMQ), polyurethane (PU) or polyacrylic rubber (ACM).

5. The cell (12) according to any one of claims 1 to 4, wherein the polymer material of the permeation portion (46) comprises an expanded polymer a with porous structure, or comprises polymer fibers forming a non-woven fabric.

6. The cell (12) according to any one of claims 1 to 5, wherein the intermediate chamber (42) is also delimited by the foot (26).

7. The cell (12) according to any one of claims 1 to 6, wherein the intermediate chamber (42) has a shape of revolution around the axis (X).

8. The cell (12) according to any one of claims 1 to 7, wherein said permeation portion (46) is a washer surrounding the axis (X) or has the shape of a washer surrounding the axis (X).

9. The cell (12) according to any one of claims 1 to 8, wherein said permeation portion (46) extends against the foot (26).

10. The cell (12) according to any one of claims 1 to 8, wherein said permeation portion (46) extends in an intermediate layer (132) of the sealing system (130) perpendicular to the axis (X) and axially separated from the foot (26) at least by a layer (134) of elastomeric material, and axially separated from the can (14) at least by another layer (136) of elastomeric material.

11. The cell (12) according to any one of claims 1 to 10, wherein the central part (40) comprises a frustoconical portion (52) around the axis (X), the frustoconical portion (52) axially flaring toward the foot (26) and having a distal extremity (54) axially with respect to the foot (26), the distal extremity (54) forming the lip (48).

12. The cell (12) according to any one of claims 1 to 11, wherein the peripheral part (38) has a disc shape.

13. The cell (12) according to any one of claims 1 to 12, further comprising a first electrical insulator (32) axially extending between the external contact (24) and the can (14), and a second electrical insulator (34) axially extending between the foot (26) and the can (14).

14. The cell (12) according to any one of claims 1 to 13, wherein the one-way valve (50) is configured so that the threshold is comprised between 0.05 and 0.30 MPa.

15. A battery (10), in particular for a vehicle, comprising at least one cell (12) according to any one of claims 1 to 14.
